# EUROPEAN PATENT SPECIFICATION

(11) **EP 3 011 616 B1**
(45) Date of publication and mention of the grant of the patent: **26.12.2018**
(21) Application number: 14858787.6
(22) Date of filing: 20.06.2014
(51) Int. Cl.: H01M 4/136, H01M 4/1397, H01M 4/38, H01M 4/62, H01M 10/052, H01M 10/0569, H01M 2/16, H01M 4/36, H01M 4/66, H01M 10/0567, H01M 10/0568

(54) **A LONG-LIFE, HIGH RATE LITHIUM/SULFUR CELL UTILIZING A HOLISTIC APPROACH TO ENHANCING CELL PERFORMANCE**
LANGLEBIGE, HOCHLEISTUNGSFÄHIGE LITHIUM-SCHWEFELZELLE MIT EINEM GANZHEITLICHEN ANSATZ ZUR ERHÖHUNG DER ZELLLEISTUNG
CELLULE ÉLECTROCHIMIQUE AU LITHIUM/SOUFRE À HAUT RENDEMENT ET LONGUE DURÉE DE VIE, UTILISANT UNE APPROCHE HOLISTIQUE POUR AMÉLIORER SA PERFORMANCE

(30) Priority: 21.06.2013 US 201361838049 P
(43) Date of publication of application: 27.04.2016
(73) Proprietor: The Regents of the University of California, Oakland, CA 94607 (US)
(72) Inventor: CAIRNS, Elton J., Walnut Creek, CA 94598 (US); SONG, Min Kyu, Emeryville, CA 94608 (US); ZHANG, Yuegang, Cupertino, CA 95014 (US)
(74) Representative: Bartle Read
(86) International application number: PCT/US2014/043503
(87) International publication number: WO 2015/065539

(56) References cited:
- WO-A1-2013/023216
- WO-A1-2013/049663
- WO-A2-2011/159922
- CN-A- 102 769 126
- CN-A- 103 123 966
- US-A1- 2011 268 647
- US-A1- 2012 088 154
- L. JI ET AL: "Graphene Oxide as a Sulfur Immobilizer in High Performance Lithium/Sulfur Cells", JOURNAL OF THE AMERICAN CHEMICAL SOCIETY , vol. 133, no. 46 1 October 2011 (2011-10-01), pages 18522-18525, XP003030984, ISSN: 0002-7863, DOI: 10.1021/JA206955K Retrieved from the Internet: URL:http://pubs.acs.org/doi/abs/10.1021/ja 206955k [retrieved on 2011-10-21]

## Description

### BACKGROUND OF THE INVENTION

### Field of the Invention

This invention relates generally to lithium sulfur cells.

### Brief Description of the Related Art

Air pollution and global warming cannot be neglected anymore and the total global energy consumption is expected to double in the upcoming decades. There have therefore been strong demands for sustainable, clean energy technologies. Among many available energy storage devices, rechargeable Li-ion batteries still represent the state-of-the-art technology in the market. However, there is a key challenge which must be overcome; current Li-ion batteries are not able to meet the ever-increasing demands of advanced technologies, and the need for lower cost. For example, the energy-storage capacity of batteries must be dramatically improved to increase the driving range of current electric vehicles. For the development of advanced electric vehicles that can provide ∼300 mile range, the battery should provide a cell-level specific energy of 350∼400 Wh/kg. This would require almost double the specific energy (∼200 Wh/kg) of current lithium-ion batteries. In addition, the cycle life must be improved to more than 1000 cycles, preferably up to 1500 cycles, and a rate performance greater than 2C would be necessary to provide a peak power of ∼600 W/kg or higher.

Recently, Li/S cells have gained intense attention because they have a much higher theoretical specific energy (∼2600 Wh/kg) than that of current lithium-ion cells (∼600 Wh/kg). This is due to the very high specific capacity of sulfur (1675 mAh/g), based on a two electron reaction (S + 2Li⁺ + 2e⁻ ↔ Li₂S), which is significantly larger than the specific capacities of current cathode materials (130∼200 mAh/g). It is expected that advanced Li/S cells could provide a driving range for electric vehicles of greater than 300 miles. In addition, sulfur is inexpensive, abundant on earth, and environmentally benign. However, there is a critical challenge in the development of advanced Li/S cells.

When elemental sulfur reacts with lithium ions to form Li₂S, intermediate species (e.g., Li₂S₈, Li₂S₆, Li₂S₄) are formed and these lithium polysulfides are soluble in most organic electrolyte solutions. This high solubility can lead to the loss of active material (i.e. sulfur) from the positive electrode during operation, which accounts for the fast capacity fading upon cycling. When these lithium polysulfides are formed and dissolved in the electrolyte solution, they can diffuse to the lithium metal electrode and form insoluble Li₂S₂ and/or Li₂S on its surface. The lithium polysulfides can also shuttle back and forth between negative and positive electrodes, lowering the coulombic efficiency of Li/S cells. The conversion reaction (S ↔ Li₂S) also involves ∼76% volume expansion/contraction during operation, which can lead to the cracking or disintegration of electrodes and severe capacity fading upon cycling.

Therefore, it is very important to recognize that the cycle life of Li/S cells is limited by coupled 'chemical' and 'mechanical' degradations. Both degradation mechanisms must be properly addressed in order to dramatically improve current-technology Li/S cells. The approach of improving a single component, however, may not allow us to solve all of the issues that are interlinked. A more holistic research approach is needed to address these complex, interlinked problems in order to radically extend the cycle life and performance of Li/S cells. To address these difficult issues, in addition to the efforts targeting the understanding of how to control each material's functionalities at the component level, scientific approaches for effectively linking these constituent materials together must be taken to produce systems that function synergistically on much larger scales in order to achieve unparalleled performance.

In addition, the insulating nature of sulfur and the Li₂S discharge product limits high-rate operation. Furthermore, the charging time for this battery technology must be reduced significantly to be considered as a practical alternative for gasoline-fueled vehicles in the market. Due to the low electronic conductivity of sulfur, a large amount of electronically conductive material must be employed in the electrode, which can often offset the merit of this technology, i.e., high specific energy. Although the capacity in the literature is very high when normalized by the weight of sulfur only, the specific capacity based on total electrode mass is typically lower than 600 mAh/g (of electrode) and sometimes even lower than 400 mAh/g (of electrode), which is just equivalent to that of current Li-ion batteries. Therefore, the sulfur loading must be increased, while maintaining high utilization and obtaining long cycle life, to fully harness the potential of Li/S chemistry.

CN 103123966 A (Univ. Henan Normal) discloses a method for preparing a positive material of a lithium-sulfur battery in which elemental sulfur is uniformly dispersed in a porous matrix structure.

CN 102769126 A (Univ. Shanghai) discloses a method for preparing a nano-sulfur/graphene oxide composite material with high specific capacity. The material is said to be applicable to a lithium sulfur secondary battery. Graphene oxide and a carbon material are to be uniformly attracted to the surfaces of nano-sulfur particles by the interaction of a surfactant and the graphene oxide to form a core-shell type nano-sulfur/graphene oxide composite material. The graphene oxide and the carbon material coat a sulfur surface to provide a sulfur electrode.

The article entitled "Graphene Oxide as a Sulfur Immobilizer in High Performance Lithium/Sulfur Cells", Journal of the American Chemical Society, vol. 133, no. 46, 1 October 2011 (2011-10-01), pages 18522-18525, describes a chemical approach to immobilization of sulfur and lithium polysulfides via the reactive functional groups on graphene oxide. This approach is said to make possible formation of a uniform and thin sulfur coating on graphene oxide sheets by a chemical reaction-deposition strategy.

WO 2013/049663 A1 (Univ. California) discloses a chemical approach to immobilization of sulfur and lithium polysulfides via reactive functional groups on graphene oxide. This approach is again said to provide a uniform and thin sulfur coating on graphene oxide sheets by a chemical reaction-deposition strategy.

WO 2013/023216 A1 (Univ. Arizona) discloses methods for making polymeric materials and composites with high sulfur content, and their use in electrochemical cells as well as optical elements.

According to the present invention there is a composition of matter according to appended claim 1 and an electrode comprising the same. According to a further aspect of the present invention, there is a battery according to appended claim 6.

Preferred embodiments are defined in the corresponding dependent claims.

### BRIEF DESCRIPTION OF THE DRAWINGS

The foregoing aspects and others will be readily appreciated by the skilled artisan from the following description of illustrative embodiments when read in conjunction with the accompanying drawings.

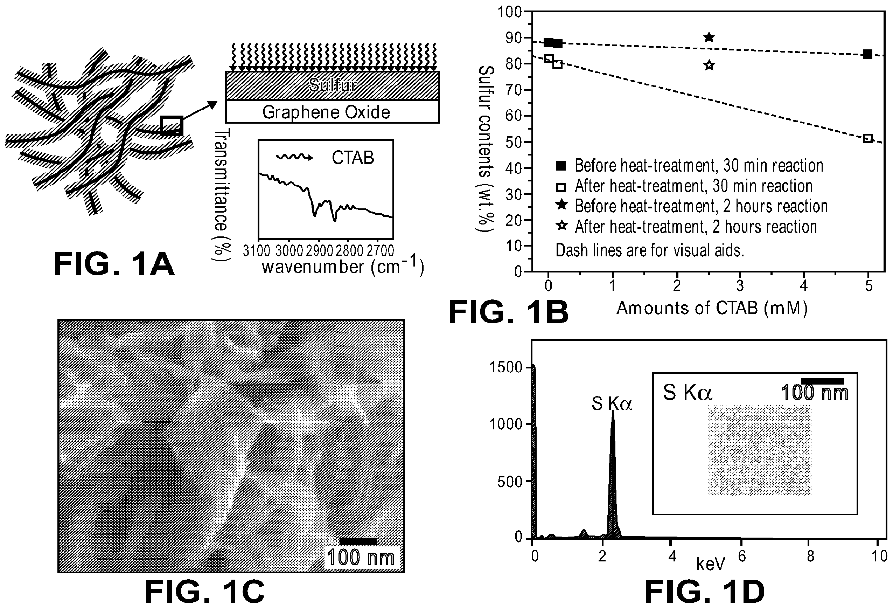

**Figure 1** illustrates synthesis and characterization of cetyltrimethyl ammonium bromide (CTAB)-modified GO-S nanocomposites. (a) Schematic of GO-S nano-hybrid structure. The presence of CTAB on the GO-S surface was confirmed by FTIR and shown to be critical to achieving improved cycling performance by minimizing the loss of sulfur. (b) Sulfur contents in the GO-S composites as a function of the amounts of CTAB added during the synthesis of the GO-S composites. 2.5mM CTAB and the reaction time of 2 hours were chosen to achieve high sulfur contents (∼80%) with improved cycling performance. (c) Typical morphology of the GO-S composites examined by scanning electron microscopy. No substantial agglomeration of sulfur was observed. (d) Energy dispersive X-ray spectroscopy mapping analysis results showing the uniform deposition of a thin layer of S onto GO.

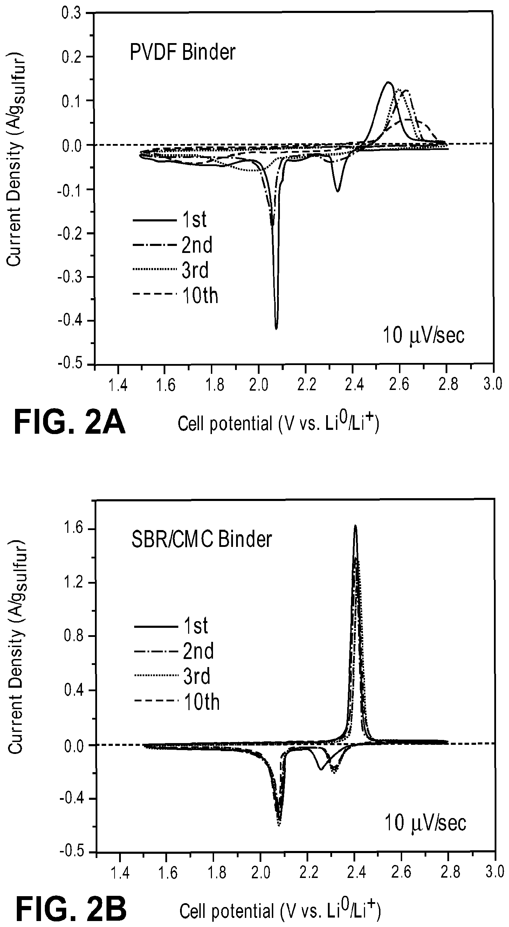

**Figure 2** illustrates cyclic voltammograms of Li/S cells employing CTAB-modified GO-S nanocomposite electrodes fabricated with different binders: (a) traditional PVDF binder and (b) elastomeric SBR/CMC (1:1 by weight) binder. The GO-S composite contained 80% S. Electrodes made with elastomeric SBR/CMC binder showed much improved cycling performance by mitigating the mechanical degradation of the electrode. This result demonstrates the importance of maintaining intimate contact between the sulfur and carbon during cycling. Cells were cycled between 1.5 and 2.8V for 10 cycles at the constant scan rate of 0.01 mVs⁻¹ and 1, 2, 3 and 10 cycles are shown. The current is normalized by the weight of sulfur. 1 M LiTFSI in PYR14TFSI/DOL/DME mixture (2:1:1 by volume) with 0.1M LiNO₃ was used as the electrolyte.

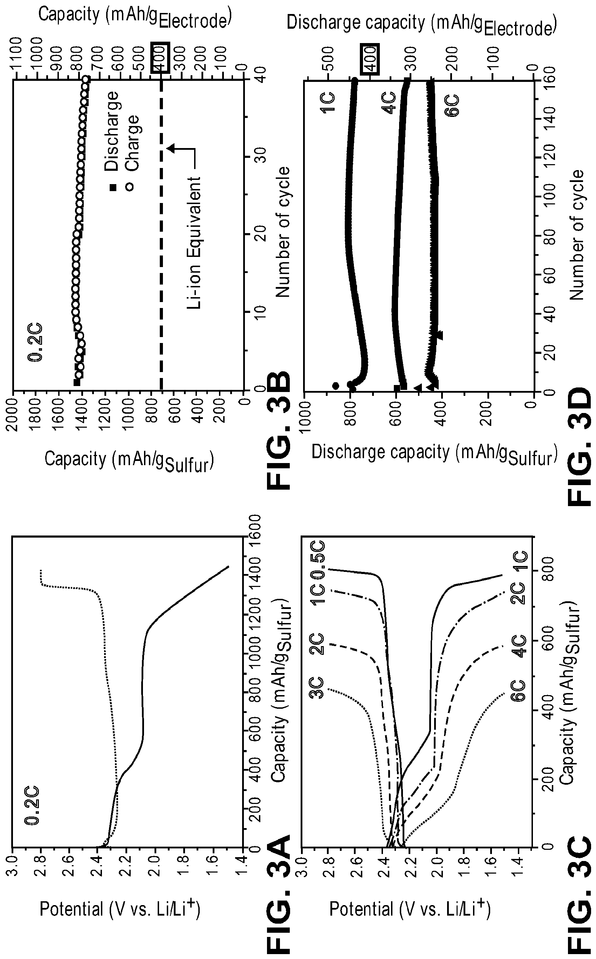

**Figure 3** illustrates an electrochemical performance of Li/S cells employing CTAB-modified GO-S nanocomposite electrodes in a novel ionic liquid-based electrolyte. (a) Initial voltage profiles of Li/S cells cycled at 0.2C showing excellent utilization of sulfur. (b) Cycling performance of CTAB-modified GO-S composite cathodes at 0.2C for 40 cycles. Capacities are both normalized by the mass of sulfur and total electrode. 400mAh/g of electrode is considered to be the Li-ion cell equivalent as typical cathodes for Li-ion cells deliver ∼200mAh/g of electrode but with higher operating voltage (∼4V) than Li/S cells. This figure shows CTAB-modified GO-S electrodes can potentially at least double the specific energy of current Li-ion cells. (c) Voltage profiles and (d) cycling performance of CTAB-modified GO-S composite cathodes at different C rates. (e) Long-term cycling test results of the Li/S cell with CTAB-modified GO-S composite cathodes. This result represents the longest cycle life (exceeding 1500 cycles) with an extremely low decay rate (0.039% per cycle) demonstrated so far for a Li/S cell. The GO-S composite contained 80% S and elastomeric SBR/CMC binder was used. 1 M LiTFSI in PYR14TFSI/DOL/DME mixture (2:1:1 by volume) with 0.1M LiNO₃ was used as the electrolyte.

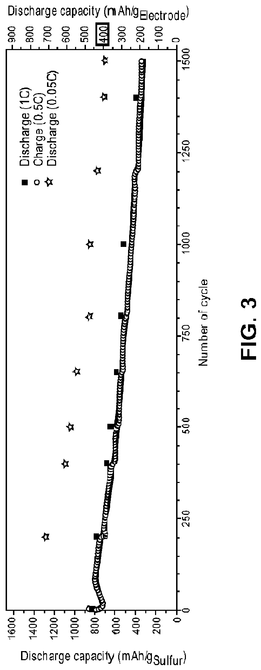

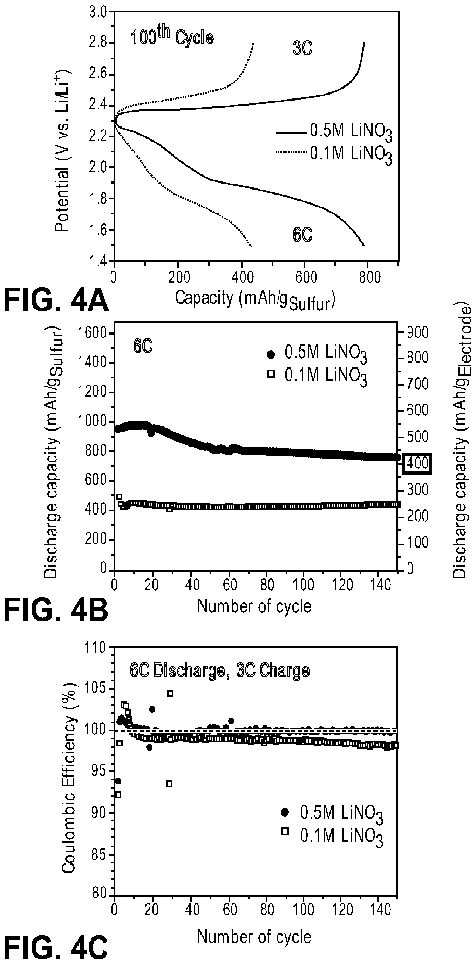

**Figure 4** illustrates an excellent rate capability of Li/S cells enabled by novel ionic liquid-based electrolyte. (a) Voltage profiles of Li/S cells discharged at 6C and charged at 3C showing excellent rate capability. (b) Cycling performance of CTAB-modified GO-S composite cathodes at the 6C rate. (c) Coulombic efficiency of Li/S cells as a function of cycle number. An increase in the concentration of LiNO₃ from 0.1M to 0.5M in PYR14TFSI/DOL/DME (2/1/1 v/v/v) electrolyte was critical to significantly enhancing the rate capability of Li/S cells with almost 100% coulombic efficiency achieved after 150 cycles when discharged at 6C and charged at 3C. The GO-S composite contained 80% S and elastomeric SBR/CMC binder was used.

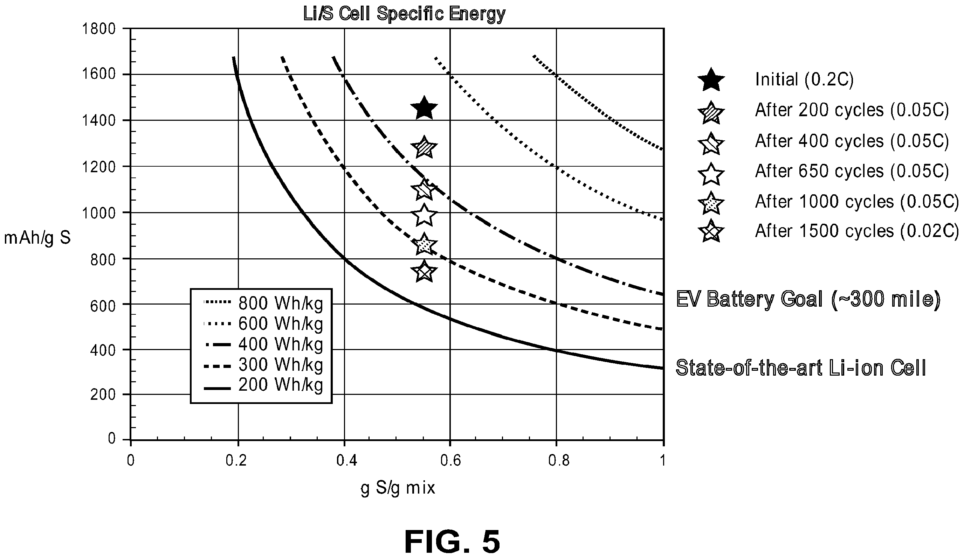

**Figure 5** illustrates an estimated cell-level specific energy plot. Cell specific energy curves are estimated using the weight of all components except the cell housing and shown as a function of the specific capacity and content of sulfur in the electrode. The data of this work is indicated by the solid stars. Details of the calculation are provided in Table 1.

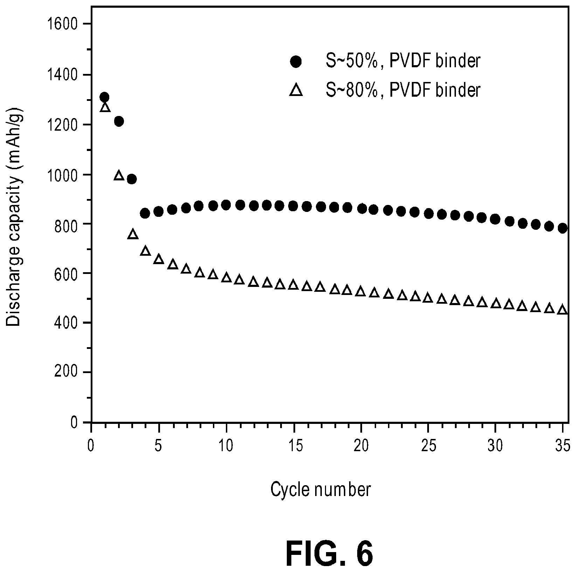

**Figure 6** illustrates cycling performance of Li/S cells fabricated with GO-S composites of different sulfur content: 50 wt.% and 80 wt.% of sulfur in the GO-S composites. Cells were cycled at a constant current rate of 0.1C after two cycles at 0.02C. PVDF binder was used to fabricate composite S cathodes. The capacity is normalized by the weight of sulfur only. The average sulfur loading of the electrodes is 0.8mg/cm². For the electrolyte, 1 mol/kg LiTFSI in PYR14TFSI/PEGDME mixture (1:1 by weight) was used.

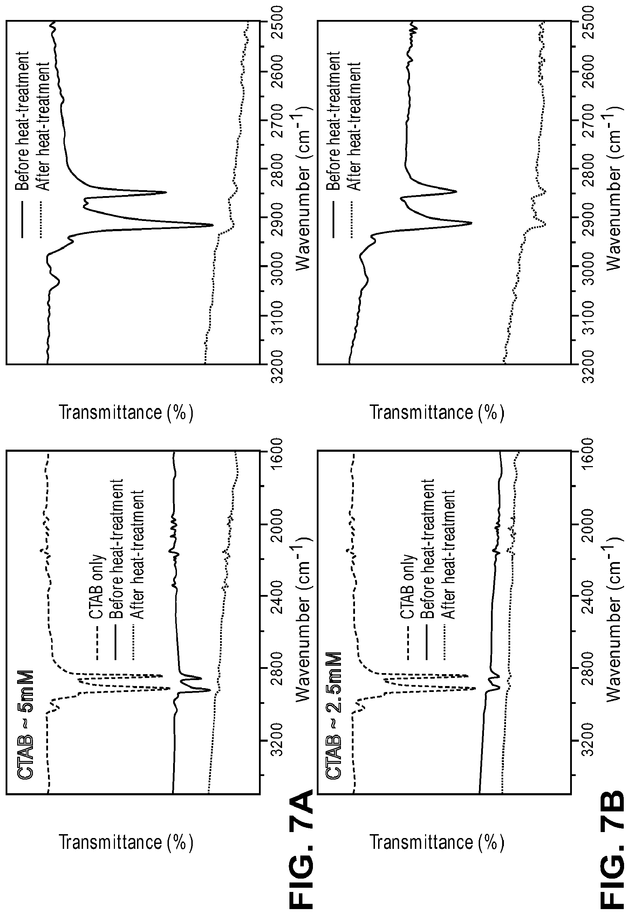

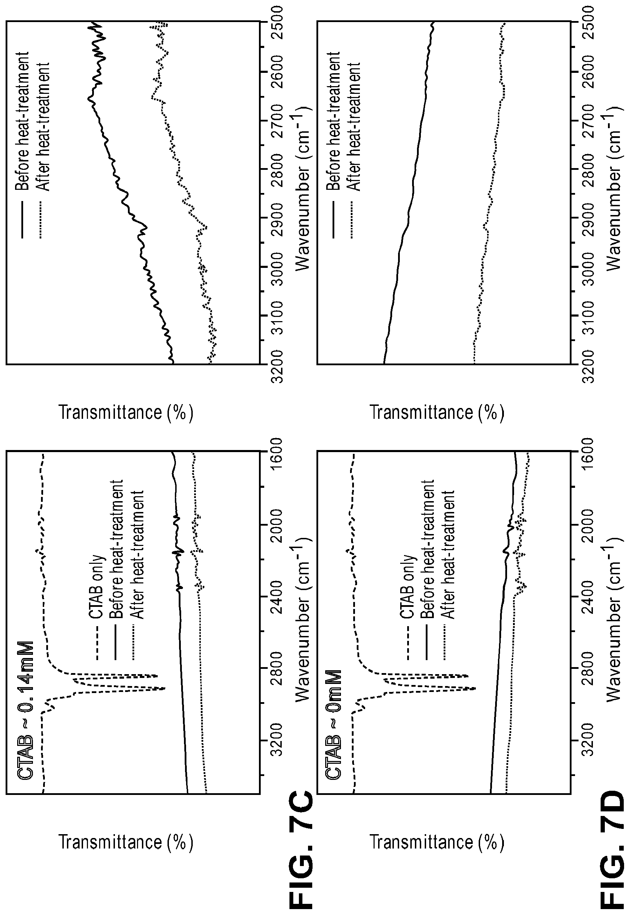

**Figure 7** illustrates FTIR spectra of GO-S nanocomposites prepared (a) with 5mM CTAB, (b) 2.5mM CTAB, (c) 0.14mM CTAB and (d) without CTAB. Figures on the right side show an enlarged view of the FTIR spectra between 3200 and 2500 cm⁻¹ for the figures on the left side. The peaks at 2918 and 2848 cm⁻¹ can be attributed to two different C-H vibratioal bands of CTAB. Figure 7 shows that the GO-S surface was well modified with CTAB.

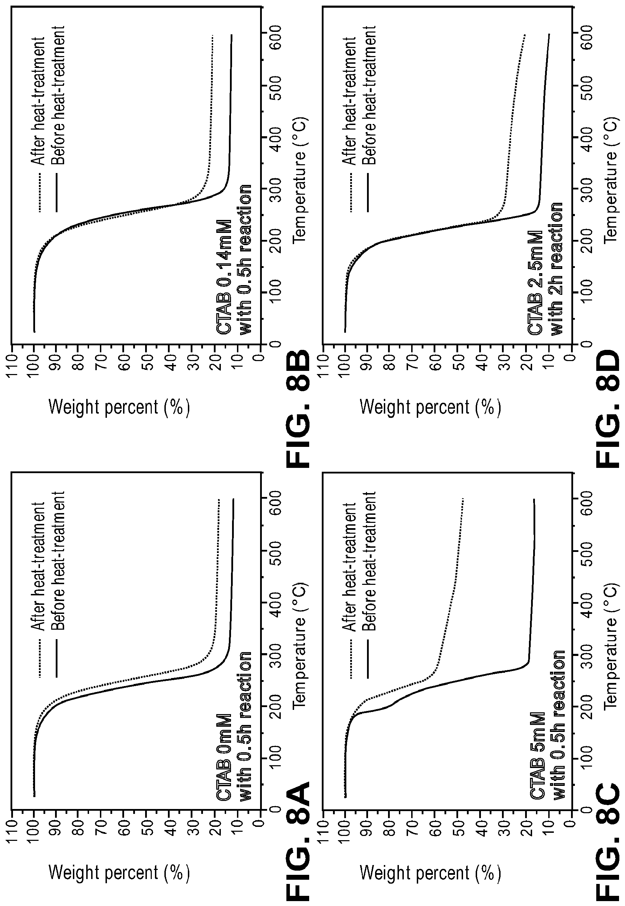

**Figure 8** illustrates TGA curves of GO-S nanocomposites prepared with different amounts of CTAB before and after heat-treatment at 155°C for 12 h in Ar. The deposition time was 30 minutes for samples (a∼c) and 2 hours for sample (d).

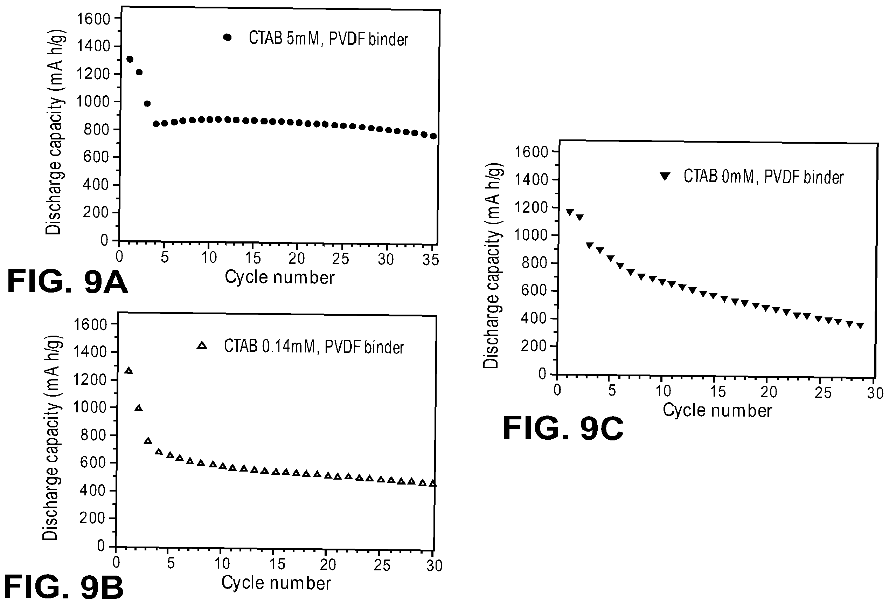

**Figure 9** illustrates cycling performance of Li/S cells fabricated with GO-S composites prepared with different amounts of CTAB added during the synthesis of GO-S nanocomposites: (a) CTAB ∼ 5mM, (b) CTAB ∼ 0.14mM, and (c) no CTAB. Cells were cycled at a constant current rate of 0.1C after two cycles at 0.02C. PVDF binder was used to fabricate the composite S cathodes. Sulfur contents of GO-S composites were 50 wt.%, 80 wt.% and 82 wt.% with 5mM, 0.14mM and no CTAB added during the synthesis, respectively. The capacity is normalized by the weight of sulfur only. For the electrolyte, 1 mol/kg LiTFSI in PYR14TFSI/PEGDME mixture (1:1 by weight) was used.

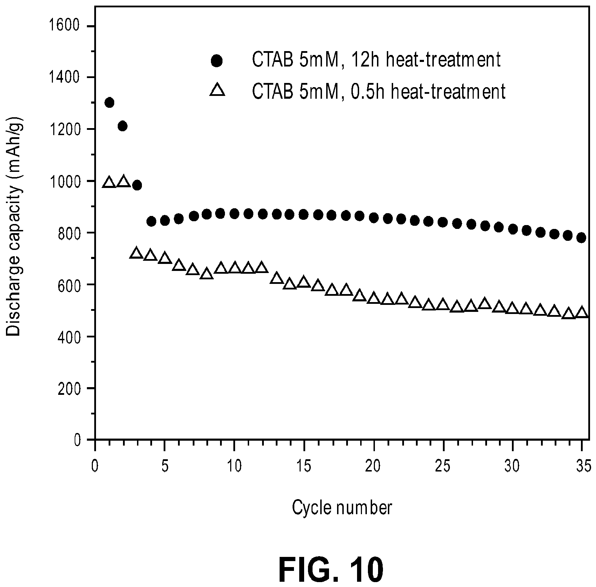

**Figure 10** illustrates cycling performance of Li/S cells fabricated with GO-S composites prepared with different heat-treatment time (12 hours and 0.5 hours) under Ar atmosphere at 155°C. 5mM CTAB was used and sulfur contents of GO-S composites were 50 wt.% and 77 wt.% after 12 hour and 0.5 hour heat-treatments, respectively. Cells were cycled at a constant current rate of 0.1C after two cycles at 0.02C. PVDF binder was used to fabricate these composite S cathodes. The capacity is normalized by the weight of sulfur only. The average sulfur loading of the electrodes is 0.8mg/cm2. For the electrolyte, 1 mol/kg LiTFSI in PYR14TFSI/PEGDME mixture (1:1 by weight) was used.

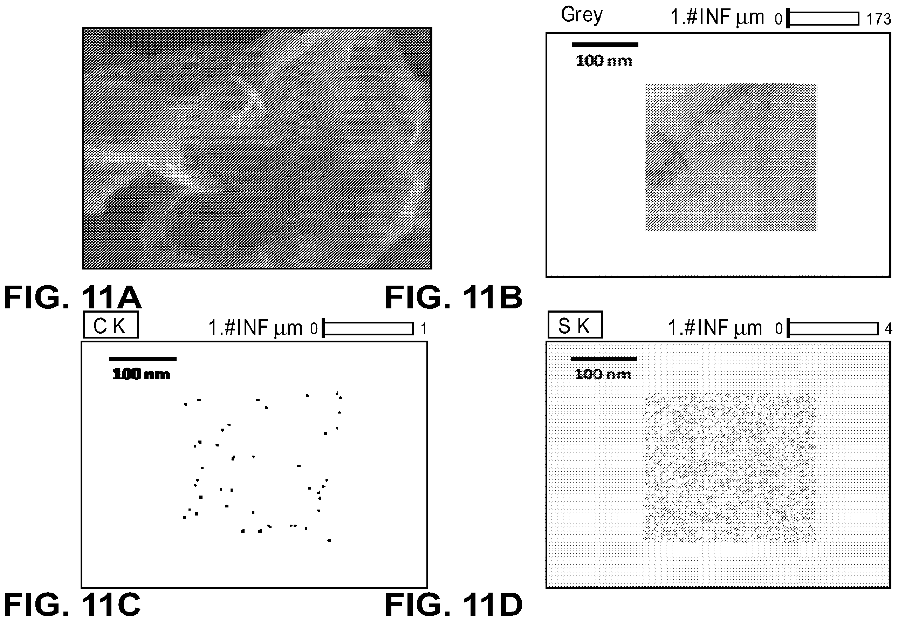

**Figure 11** illustrates (a) SEM image, (b) a selected area for elemental mapping of (c) carbon and (d) sulfur by energy dispersive X-ray spectroscopy of GO-S nanocomposites with 80% sulfur loading.

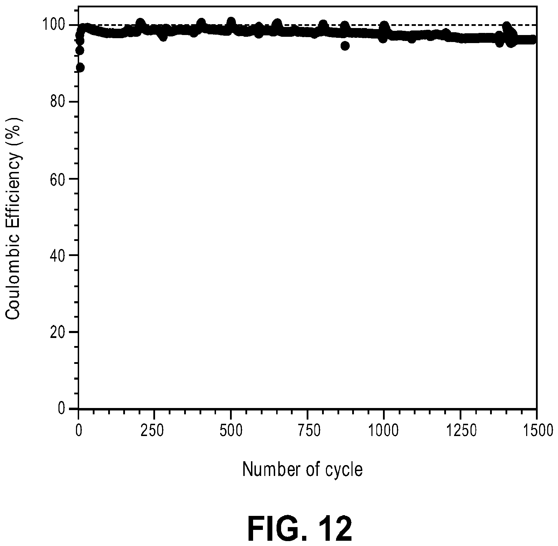

**Figure 12** illustrates coulombic efficiency of Li/S cells as a function of cycle number. Coulombic efficiencies were 98.8%, 97.8% and 96.3% after 500, 1000, and 1500 cycles at rates of 1C and 0.5C for discharge and charge, respectively. SBR/CMC binder was used to fabricate these composite S cathodes. The GO-S composite contained 80% S, and the electrode composition was 70% S-GO, 20% Super P, and 10% SBR/CMC. For the electrolyte, 1 M LiTFSI in PYR14TFSI/DOL/DME mixture (2:1:1 by volume) with 0.1M LiNO₃ was used.

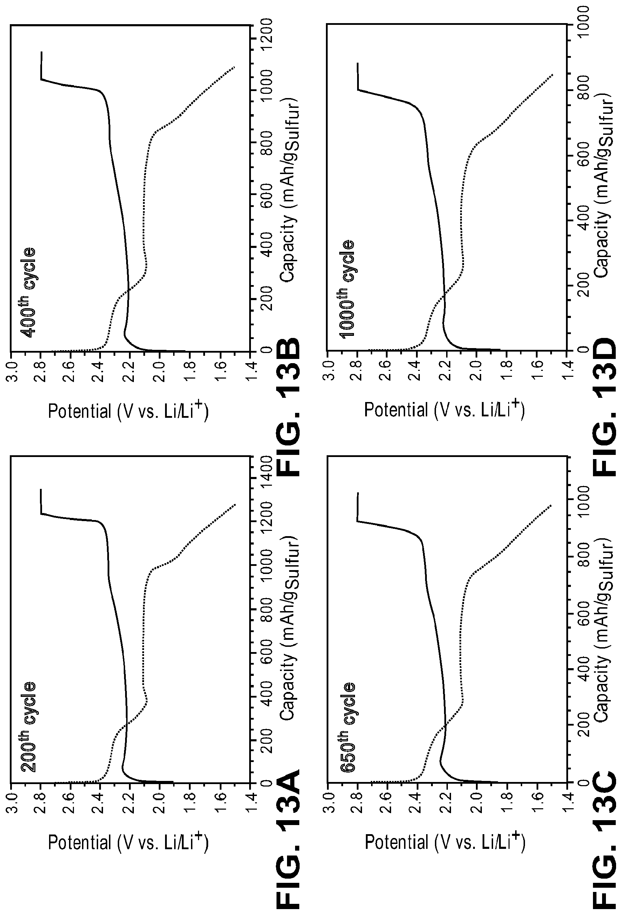

**Figure 13** illustrates voltage profiles of CTAB-modified GO-S nanocomposite cathodes, cycled between 1.5 and 2.8V at a constant rate of 0.05C after (a) 200 cycles, (b) 400 cycles, (c) 650 cycles, and (4) 1000 cycles at 1C for discharging and 0.5C for charging. Constant-voltage was applied after constant current charging until the current drops below 5% of the initial charging current. SBR/CMC binder was used to fabricate these composite S cathodes. The GO-S composite contained 80% S, and the electrode composition was 70% S-GO, 20% Super P, and 10% SBR/CMC. The capacity is normalized by the weight of sulfur only. The average sulfur loading of the electrodes is 0.8mg/cm². For the electrolyte, 1 M LiTFSI in PYR14TFSI/DOL/DME mixture (2:1:1 by volume) with 0.1M LiNO₃ was used.

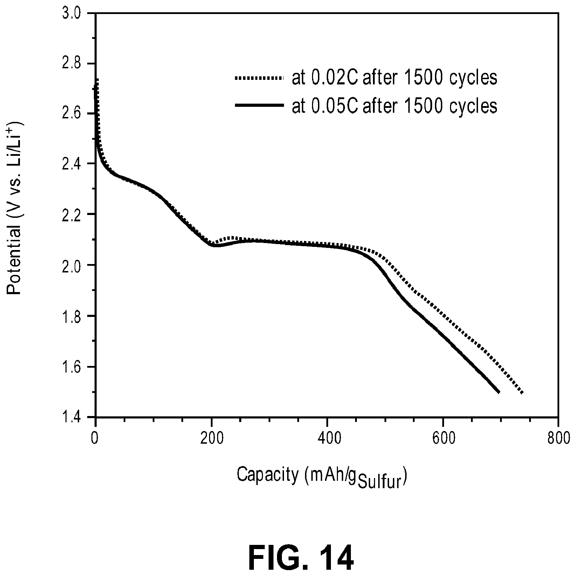

**Figure 14** illustrates discharge voltage profiles of CTAB-modified GO-S nanocomposite cathodes, cycled between 1.5 and 2.8V at constant rates of 0.02C and 0.05C after 1500 cycles at the 1C rate for discharging and 0.5C rate for charging. SBR/CMC binder was used to fabricate the composite S cathodes. The GO-S composite contained 80% S, and the electrode composition was 70% S-GO, 20% Super P, and 10% SBR/CMC. The capacity is normalized by the weight of sulfur only. The average sulfur loading of the electrodes is 0.8mg/cm2. For the electrolyte, 1 M LiTFSI in PYR14TFSI/DOL/DME mixture (2:1:1 by volume) with 0.1M LiNO₃ was used.

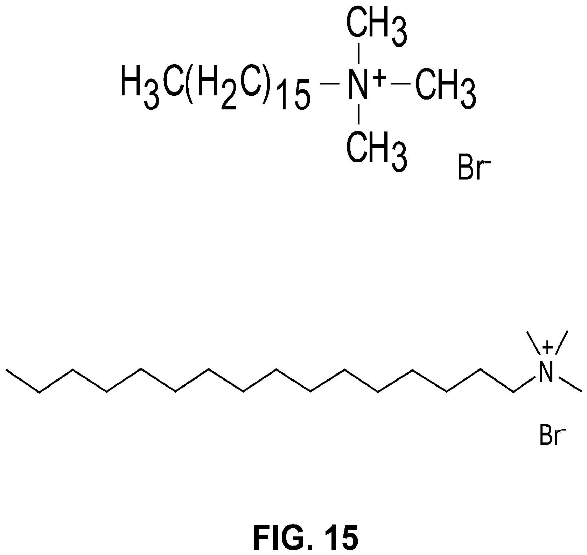

**Figure 15** illustrates a molecular structure of cetyltrimethyl ammonium bromide (CTAB)

### DETAILED DESCRIPTION

In the discussions that follow, various process steps may or may not be described using certain types of manufacturing equipment, along with certain process parameters. It is to be appreciated that other types of equipment can be used, with different process parameters employed, and that some of the steps may be performed in other manufacturing equipment without departing from the scope of this invention. Furthermore, different process parameters or manufacturing equipment could be substituted for those described herein without departing from the scope of the invention.

These and other details and advantages of the present invention will become more fully apparent from the following description taken in conjunction with the accompanying drawings.

Various embodiments describe a high-rate lithium sulfur (Li/S) cell with high specific energy that exploits the unique combination of a cetyltrimethyl ammonium bromide (CTAB)-modifed graphene oxide-sulfur (GO-S) nanocomposite cathode fabricated with elastomeric SBR/CMC binder, the new formulation of our ionic liquid-based electrolyte that contains ionic liquid, (n-methyl-(n-butyl) pyrrolidinium bis(trifluoromethanesulfonyl)imide (PYR14TFSI), and a mixture of 1,3-dioxolane (DOL) and dimethoxyethane (DME) with 1M lithium bis(trifluoromethylsulfonyl)imide (LiTFSI), and a lithium metal electrode protected by lithium nitrate (LiNO₃) additive in the electrolyte. The Li/S cell demonstrated herein synergizes some existing concepts and presents a performance that has never been realized before. We demonstrate that Li/S cells can have an ultra-long service life exceeding 1500 cycles at the 1C rate (1.675 A/g of sulfur) with excellent specific capacity: ∼846 mAh/g of sulfur at 0.05C after 1000 cycles at 1C and ∼740 mAh/g of sulfur at 0.02C after 1500 cycles at 1C. We also show that a Li/S cell can be discharged at rates as high as 6C (10.05 A/g of sulfur) and charged at rates as high as 3C (5.03 A/g of sulfur), while still maintaining a specific capacity (∼800 mAh/g of sulfur at 6C) much higher than those (130∼200 mAh/g) of current cathode materials for Li-ion cells at much lower C-rates (typically at 0.1 - 0.5C).

### Results

### CTAB-modified GO-S nanocomposites for mitigating 'chemical' degradation.

The loss of sulfur from the positive electrode represents a grand challenge in achieving a long cycle life. To address this issue, physical adsorption approaches using a high surface area of carbons have been employed. Nazar and coworkers pioneered the use of a large effective surface area of mesoporous carbon to help adsorb dissolved lithium polysulfides and therefore improve the cycling performance of Li/S cells. Due to the weak physical adsorption in the open porous structures, however, the polysulfide dissolution problem cannot be completely avoided. The cycle life using this physical adsorption approach demonstrated so far is often less than 200 cycles, which is insufficient for many intended applications such as portable electronics and electric vehicles. To improve the cycling performance, we have used graphene oxide (GO) as a sulfur immobilizer. We found that the functional groups (such as hydroxyl, epoxide, carbonyl and carboxyl groups) on the surface of graphene oxide form bonds with sulfur. Both Raman and S 2p X-ray photoelectron spectroscopic analysis showed the existence of chemical bonding between GO and sulfur after chemically depositing a thin sulfur coating onto GO. With this chemical approach, we have successfully immobilized sulfur and lithium polysulfides via the reactive functional groups on graphene oxide.

Although our previous results showed a stable cycling performance of up to 50 deep cycles using our GO-S nanocomposite cathodes, the deterioration of capacity becomes more significant with higher loadings of sulfur under the same conditions (Figure 6). Such deterioration is the major barrier to commercialization of this technology. Possible mechanisms of such deterioration in GO-S nanocomposite cathodes are that (1) only the inner layer of sulfur is directly immobilized by the intimate contact with GO, therefore outer-layer sulfur can be dissolved into the electrolyte, and lithium polysulfides not immobilized by GO can diffuse to the opposite electrode; (2) extended cycling can still cause the disintegration of the electrode because the conventional binder (PVdF) used in previous work cannot accommodate the accumulated strain/stress induced by repeated expansion (S→Li₂S) and contraction (Li₂S→S) processes during the extended cycling. Also, the sulfur loading in the earlier work was about 67 wt.% of sulfur in the GO-S nanocomposite (with 70 wt.% of GO-S in the composite electrodes), which results in a low specific capacity of the sulfur electrodes.

To obtain a dramatically improved cycle life, the outer layer of sulfur must first be protected from dissolving while the inner layer of sulfur can be immobilized by functional groups on GO. This issue is even more critical when the sulfur loading is increased, as the coating becomes thicker, which means that a larger portion of the sulfur is vulnerable to this dissolution issue. In one embodiment, we used cetyltrimethyl ammonium bromide (CTAB)-modified GO-S nanocomposites to address this issue. CTAB is one kind of cationic surfactant (Figure 15) used to modify the surface functionality of nanoparticles (e.g. iron oxides) in drug delivery research and water treatments. The amount of CTAB can significantly affect adsorption capability towards dyes and organic compounds when deposited onto the surface of these nanoparticles. Therefore, CTAB-modified sulfur anchored on the functional groups of GO should be a significant improvement of the sulfur electrode for advanced Li/S cells. Figure 1a shows the concept of our approach.

In one embodiment, we synthesized GO-S nanocomposites with sulfur anchored on graphene oxide. To deposit CTAB on the surface of sulfur, CTAB was added during the acidification of sodium polysulfide in formic acid for 30 minutes at room temperature. The amount of CTAB was varied from 0 to 5mM in order to investigate the effect of CTAB modification on the electrochemical performance of GO-S nanocomposite cathodes. The presence of CTAB on the surface of GO-S nanocomposites was analyzed by FT-IR (Figures 1a, 7) and the sulfur loading was determined by TGA (Figure 8). According to the literature, the peaks at 2918 and 2848 cm⁻¹ can be attributed to two different C-H vibrational bands of CTAB, implying that the GO-S surface was well modified with CTAB. Before heat-treatment at 155°C under Ar, the sulfur loading was not sensitive to the amount of CTAB added (average ∼86%). However, after heat-treatment, we found the sulfur loading decreased as more CTAB was added (Figure 1b). For example, without CTAB, the remaining sulfur was ∼82%, but with 5mM of CTAB, this was reduced to only ∼50% after heat treatment.

Without CTAB, and with high sulfur loading (∼82%), the cell capacity decreased rapidly, whereas the addition of just 0.14mM CTAB (S ∼ 80%) showed improved capacity retention (Figure 9). The addition of a larger amount of CTAB (5mM with 50% S) showed the best capacity retention. However, the improvement of cycling performance by adding CTAB was at the expense of lower S loading. In order to increase the sulfur loading with the presence of CTAB, 2.5mM of CTAB was chosen and the reaction time was increased from 30 minutes to 2 hours. We obtained higher sulfur loading ∼90% before heat treatment, and ∼80% sulfur loading after heat-treatment for 12 hours as shown in Figure 1b.

The heat-treatment process is also critical as it allows molten sulfur to diffuse into the nanopores of GO to allow more sulfur to be immobilized by the GO-matrix. This could also improve the uniformity of the sulfur coating on the GO surfaces and increase utilization of sulfur. For example, when the heat-treatment time was decreased from 12 hours to 30 minutes, higher sulfur loading (∼77% sulfur with 5mM CTAB) was obtained due to limited sulfur loss during heat-treatment, but very poor utilization was observed (Figure 10). However, with the optimized synthesis procedure, the coating of sulfur was uniform, even with 80% sulfur, which was confirmed by scanning electron microscopy (SEM) and energy dispersive X-ray spectroscopy (EDS) mapping analysis (Figures 1c,d, 11). The typical morphology of the composites observed by scanning electron microscopy (SEM) is shown in Figure 1c. Sulfur is uniformly deposited onto graphene oxide with no substantial agglomeration of sulfur. Uniform, thin deposition of sulfur is critical to achieving high utilization and fast kinetics by providing good electron pathways with reduced diffusion length of lithium within the composites. Indeed, CTAB-modified GO-S nanocomposite cathodes delivered a specific capacity of 1440 mAh/g of sulfur at the 0.2C rate (1C = 1675 mA/gS), which is ∼86% of the theoretical value (Figure 3a).

### Elastomeric binders for mitigating 'mechanical' degradation

The performance of Li/S cells is often limited by structural degradation and/or failure of the electrodes. Volume expansion/contraction (∼76%) during cycling is unavoidable in the sulfur electrode and can result in the electrical isolation of active material (i.e., sulfur) from the current collectors, and therefore, gradual capacity loss during cycling. In this aspect, the binder plays an important role in improving the service life of Li/S cells. The essential requirements of an ideal binder include good adhesion to the electrode materials and maintenance of the structural integrity of the electrode during cell operation. Therefore, elastomeric binders are a good choice for maintaining the integrity of the electrode structure during cycling. When an elastomeric styrene butadiene rubber (SBR) binder was employed with carboxy methyl cellulose (CMC) as the thickening agent, sulfur electrodes showed a much improved cycling performance compared to those with polyethylene oxide (PEO) and polyvinylidene fluoride (PVDF) binders.

In one embodiment, we have replaced the traditional PVDF binder with an elastomeric SBR/CMC binder to further improve the cycling performance of CTAB-modified GO-S nanocomposite cathodes. Cyclic voltammetry experiments were conducted on CTAB-modified GO-S nanocomposite electrodes made with PVDF and SBR/CMC binders with a scan rate of 0.01mV/sec between 1.5 and 3.0V vs. Li/Li⁺. Two reduction peaks and one oxidation peak are clearly shown in the cyclic voltammograms (Figure 2). GO-S nanocomposite cathodes made with PVDF binder showed a decrease in current density of both oxidation and reduction peaks due to the loss of capacity during cycling. Additionally, both oxidation and reduction peaks became broadened to a great extent, indicating that the collection of current had become difficult, which can be attributed to the structural disintegration of electrode (i.e., electrical isolation of sulfur from the current collector) by mechanical degradation.

On the contrary, the GO-S nanocomposite electrode made with a SBR/CMC binder showed very stable cyclic voltammograms during 10 cycles, indicating the importance of maintaining intimate contact between the sulfur and carbon during cycling, enabled by the elastomeric binder (Figure 2b). The overlap of the oxidation and reduction peaks and their small separation implies that this electrode can operate with a very high efficiency, good reversibility and fast kinetics. In addition to the elastomeric property of the SBR binder, a SBR-CMC mixture was reported to have good adhesion and dispersion capabilities, which also led to the improved performance of CTAB-modified GO-S nanocomposite cathodes. The very sharp peaks and small offset between reduction and oxidation peaks for the SBR-CMC electrode are clear evidence of excellent rate capability.

### Ionic liquid-based novel electrolytes for long-life, high-rate operation.

The principal function of electrolytes for batteries is to provide fast transport of ions between anodes and cathodes. In Li/S cells, however, there is a major problem with capacity loss during operation, mainly originating from the high solubility of lithium polysulfides in many liquid electrolytes. To address this issue, we introduced a mixture of ionic liquid (n-methyl-(n-butyl) pyrrolidinium bis(trifluoromethanesulfonyl)imide (PYR14TFSI) and polyethylene glycol dimethyl ether (PEGDME), which led to stable cycling performance. However, the rate capability of Li/S cells with PYR14TFSI/PEGDME-based electrolyte needs to be improved further.

In this work, to improve the rate capability of Li/S cells while maintaining the advantage of using the ionic liquid as effective solvent for minimizing the dissolution of polysulfides, a mixture (1/1 v/v) of 1,3-dioxolane (DOL) and dimethoxyethane (DME) was introduced to the PYR14TFSI. The electrochemical performance of Li/S cells employing CTAB-modified GO-S nanocomposite cathodes was then evaluated in this new formulation of electrolyte composed of a mixture of PYR14TFSI/DOL/DME (2/1/1 v/v/v) containing 1M LiTFSI. We also added 0.1M LiNO₃ to this electrolyte in order to further minimize polysulfide shuttling by the passivation of the lithium metal surface, as this can prevent chemical reactions of polysulfide species in the electrolyte with the lithium electrodes by preventing polysulfides from directly contacting the lithium metal. CTAB-modified GO-S nanocomposite cathodes exhibited a very high reversible capacity of 1440 mAh/g of sulfur (Figure 3a) and showed a very stable cycling performance up to 40 deep cycles at 0.2C and good rate capability (up to 6C and 3C for discharge and charge, respectively) in this ionic liquid-based novel electrolyte (Figure 3b-d).

The CTAB-modified GO-S nanocomposite electrode made with a SBR/CMC binder was successfully cycled in the ionic liquid-based electrolyte up to 1500 cycles at rates of 1C and 0.5C for discharge and charge, respectively with an extremely low capacity decay rate (0.039% per cycle) and high coulombic efficiency of 96.3% after 1500 cycles (Figure 12). To check the specific capacity that can be obtained at a lower Crate, cells were checked periodically during the long-term cycling test and the discharge/charge capacity was measured using the 0.05C rate. This long-term cycling performance is shown in Figure 3e. After 1000 cycles the discharge capacity was ∼846 mAh/g at 0.05C (Figure 13). This high specific capacity is sufficient to meet the US Department of Energy target for vehicle electrification. Even after 1500 cycles, the discharge capacity was ∼700 mAh/g of sulfur at 0.05C and ∼740 mAh/g of sulfur at 0.02C (Figure 14), showing the great promise of the unique combination of CTAB-modified GO-S composite, SBR/CMC binder, and PYR14TFSI/DOUDME/LiNO₃ electrolyte.

The remaining issue is to achieve an excellent rate capability with good sulfur utilization (i.e., high specific capacity at high C rates). This electrolyte enabled very high rate operation of Li/S cells up to 6C and 3C for discharge and charge, respectively. An increase in the concentration of LiNO₃ from 0.1M to 0.5M in PYR14TFSI/DOL/DME (2/1/1 v/v/v) electrolyte was shown to significantly improve the rate capability of Li/S cells further (Figure 4). Typical discharge and charge curves are shown in Figure 4a. Even at the 6C rate, very high capacities were obtained and can be maintained up to 150 cycles with no substantial capacity loss, as shown in Figure 4b. The reversible discharge capacity of Li/S cells with CTAB-modifed GO-S composite cathodes in this electrolyte (with 0.5M LiNO₃) was ∼800 mAh/g of sulfur at 6C, and showed excellent cycling performance with almost 100% coulombic efficiency after 150 cycles when discharged at 6C and charged at 3C (Figure 4c). This much-improved rate capability and excellent cycling performance can be attributed to the increased ionic conductivity of the electrolyte and suppressed polysulfide dissolution due to the common ion effect caused by the increased concentration of lithium ions. We are not aware of any Li/S cells currently showing this high rate capability.

### Discussion

It should be noted that a key parameter of a practical cell is the cell-level specific energy. Since the cell's specific energy is largely determined by the sulfur content and sulfur utilization, it is important to maximize both. The estimated cell-level specific energy values (including weight of all cell components except the cell housing) from this work are shown in Figure 5. It is clearly indicated by this graph that high cell-level specific energy can be achieved only when the loading of sulfur is high, and high utilization is obtained. The initial estimated cell-level specific energy value was ∼500 Wh/kg, and even after 1000 cycles, ∼300 Wh/kg was achieved, which is much higher than that of currently available Li-ion cells.

Figure 5 illustrates the estimated cell-level specific energy plot. Cell specific energy curves are estimated using the weight of all components except the cell housing and shown as a function of the specific capacity and content of sulfur in the electrode. The data of this work is indicated by the solid stars. Details of the calculation are provided in Table 1 below.

**Table 1. Data for estimation of the Li/S cell-level specific energy**

| **Design Parameters for Calculations of Cell Specific Energy Density** | |
|---|---|
| Cell part | Weight of Material for Li/S cell (mg/cm²) |
| Cu Foil (5 microns thick) | 4.5 |
| Lithium Electrode (100% excess) | 3.6 |
| Electrolyte and separator (50 microns thick) | 5 |
| S Electrode (including binder/additives) | 6 |
| A1 Foil (5 microns thick) | 1.4 |
| Total weight | 20.5 |

Cell design parameters used to estimate the cell-level specific energy (including all components except cell-housing) are shown in Table 1. A sulfur electrode loading of 6 mg/cm² is assumed to calculate the cell specific energy curves shown in Figure 5. A 100% excess of lithium is assumed with respect to the theoretical amount required for the full conversion of S to Li₂S. For the electrolyte, two layers of separator (polypropylene, porosity 50%, density = 0.9 g/cm³) and organic solvent (average density = 1.1 g/cm³) are assumed.

In addition to the pre-existing concepts of using elastomeric binders (to mitigate mechanical degradation), ionic-liquid based electrolytes (to minimize polysulfide shuttle), and LiNO₃ as additive (to protect lithium metal electrodes), we have taken a big step forward in this work by employing a CTAB-modified GO-S nanocomposite cathode (to mitigate chemical degradation). The unique combination of these concepts in our work has enabled an ultra-long life and excellent rate capability, which were never achieved before in Li/S cells.

Another important aspect of this work is the demonstration of the greatly improved cycling ability and the excellent rate capability of lithium metal electrodes when used with our ionic liquid-based electrolytes with the controlled LiNO₃ additive (0.1∼0.5M). The lithium metal electrode has exhibited a cycle life in excess of 1500 cycles with no cell shorting caused by dendrites. This combination of Li metal electrode and ionic liquid-based electrolyte should be compatible with conventional Li-ion cell cathodes such as LiFePO₄ electrodes and may allow the elimination of such materials as carbon or silicon as the negative electrode in Li-ion cells. This can save almost 90% of the weight of the typical carbon negative electrode used in current Li-ion cells.

In summary, we have developed a long-life, high-rate Li/S cell with high specific energy through a holistic approach by uniquely combining CTAB-modified GO-S nanocomposites with an elastomeric SBR/CMC binder and an ionic liquid-based novel electrolyte with the LiNO₃ additive. These Li/S cells exhibited a very high initial discharge capacity of 1440 mAh/g of sulfur at 0.2C with excellent rate capability of up to 6C for discharge and 3C for charge while still maintaining high specific capacity (e.g., ∼800 mAh/g of sulfur at 6C). We have further demonstrated cycling performance up to 1500 cycles, which is the longest cycle life (decay rate of 0.039% per cycle) reported to the best of our knowledge. With the high specific energy, long cycle life and excellent rate capability demonstrated in this work, the Li/S cell seems to be a promising candidate to challenge the dominant position of the current Li-ion cells.

### Methods

### Synthesis of CTAB-modified GO-S nanocomposites.

0.58g of sodium sulfide (Na₂S, anhydrous, Alfa Aesar) was dissolved in 25ml ultrapure water (Millipore) to form a Na₂S solution, then 0.72g elemental sulfur (S, sublimed, 99.9%, Mallinckrodt) was added to the Na₂S solution and stirred with a magnetic stirrer for 2 hours at room temperature. The color of the solution changed slowly from yellow to orange as the sulfur dissolved. After dissolution of the sulfur, a sodium polysulfide (Na₂Sₓ) solution was obtained. Commercial graphene oxide (GO) water dispersion (10mg/ml, ACS Material) was used for the deposition of S onto GO by a chemical precipitation method in an aqueous solution. 18ml of GO solution was taken by an auto pipette and diluted with ultrapure water (162ml) to form a GO suspension (180mg of GO in 180ml of ultrapure water). Different amounts (0∼5mM) of cetyltrimethyl ammonium bromide (CTAB, CH₃(CH₂)₁₅N(Br)(CH₃)₃, Sigma Aldrich) were added to the GO suspension and stirred for 2 hours. Then, the Na₂Sₓ solution was added to the prepared GO-CTAB blended solution drop-wise using a glass pipette while stirring. Then, the Na₂Sₓ-GO-CTAB blended solution was stirred for 16 hours (overnight). Then the as-prepared Na₂Sₓ-GO-CTAB blended solution was slowly added to 100ml of 2M formic acid (HCOOH, 88%, Aldrich) using a burette while stirring. The resulting mixture was stirred for 0.5 hours or 2 hours for elemental S to be precipitated onto the GO. Finally, the CTAB-modified GO-S composite was filtered and washed with acetone and ultrapure water several times to remove salts and impurities. Then, the CTAB-modified GO-S composite was dried at 50°C in a vacuum oven for 24 hours. The as-synthesized CTAB-modified GO-S composite was heat-treated in a tube furnace under flowing argon with a controlled flow rate of 100cc/s at 155°C for 12 hours. In order to control the S content, 0.5 hours was also used.

### Materials characterization.

A scanning electron microscope (SEM, Zeiss Gemini Ultra-55) was operated at an accelerating voltage of 3 kV to examine the morphology of the CTAB-modified GO-S nanocomposites. An energy dispersive X-ray spectrometer attached to the SEM (JEOL JSM-7500F) was used to conduct elemental analysis of sulfur and the distribution with an accelerating voltage of 10 kV. Thermogravimetric analysis (TGA, TA Instruments Q5000) was used to determine the weight of the S anchored onto GO using a heating rate of 10°C/min in N₂. Fourier transform infrared spectroscopy (FTIR, PerkinElmer Spectrum One) was used to examine the presence of CTAB on the GO-S surface.

### Cell assembly and electrochemical characterization.

The sulfur electrodes were fabricated by mixing the GO-S nanocomposite, carbon black (Super P) with a binder (either PVDF or SBR/CMC 1:1 by weight) at a weight ratio of 70:20:10 in N-methyl-2-pyrrolidone (NMP) solvent for PVDF or ethanol/water (1:1 by volume) solution for SBR/CMC to form a slurry using an ultrasonicator. The resulting slurry was uniformly spread via a doctor blade (Elcometer 3540 Bird Film Applicator) on pure aluminum foil. The solvent was allowed to evaporate at room temperature for 24 hours. The electrodes were then dried in a vacuum oven at 50°C for 48 hours to fully eliminate any solvent residue. The electrode was punched into circular pieces with a diameter of 12.7 mm for cell assembly. The average sulfur loading of the electrodes was ∼0.8mg/cm².

For the electrolyte, 1 mol/kg lithium bis(trifluoromethylsulfonyl)imide (LiTFSI, Sigma-Aldrich) in (n-methyl-(n-butyl) pyrrolidinium bis(trifluoromethanesulfonyl)imide (PYR14TFSI, Sigma-Aldrich)/polyethylene glycol dimethyl ether (PEGDME, Sigma-Aldrich) mixture (1:1, by weight) was prepared and used for evaluation of the electrochemical performance of electrodes with different sulfur loadings, CTAB amounts, and heat-treatments. For the long-term cycling test and rate capability measurements, a mixture of 1,3-dioxolane (DOL) and dimethoxyethane (DME) was introduced to PYR14TFSI to form 1 M LiTFSI in PYR14TFSI/DOL/DME mixture (2:1:1 by volume). 0.1M or 0.5M LiNO₃ was used as an additive in the electrolyte.

CR2032-type coin cells were assembled by sandwiching two separators (Celgard 2400) between a lithium metal foil (99.98%, Cyprus Foote Mineral) and a sulfur electrode fabricated with the GO-S composite in a glove box filled with high-purity argon gas. Cyclic voltammetry was performed using a potentiostat (Biologic VSP) with a voltage range of 1.5 to 2.8V for 10 cycles at a constant scan rate of 0.01 mVs⁻¹. Galvanostatic discharge and charge testing of the coin cells was performed using a battery cycler (Maccor Series 4000) at different rates between 1.5 and 2.8V. The cell capacity was normalized both by the weight of sulfur and total electrode weight. Before all electrochemical characterizations, the cells were held at open circuit at room temperature for 24 h. All electrochemical characterizations were performed inside a chamber (TestEquity TEC1) maintained at 30 °C.

This invention has been described herein to provide those skilled in the art with information relevant to apply the novel principles and to construct and use such specialized components as are required. However, it is to be understood that the invention can be carried out by different equipment, materials and devices, and that various modifications, both as to the equipment and operating procedures, can be accomplished without departing from the scope of the invention itself.

## Claims

1. A composition of matter comprising:
a cetyltrimethyl ammonium bromide (CTAB) modified graphene oxide (GO)-sulfur (GO-S) nanocomposite, wherein GO further comprises a plurality of functional groups and S is bonded to carbon atoms and the concentration of CTAB is in a range of 2.5mM to 5mM.

2. The composition of matter of claim 1, wherein the plurality of functional groups includes at least one functional group selected from the group consisting of an epoxy bridge, a hydroxyl group, a phenol group, and a carbonyl group.

3. The composition of matter of claim 1, wherein the composition is produced by heat treatment of the nanocomposite in a range of 30 minutes to 12 hours.

4. An electrode comprising the composition of claim 1.

5. The electrode of claim 4, wherein the plurality of functional groups includes at least one functional group selected from the group consisting of an epoxy bridge, a hydroxyl group, a phenol group, and a carbonyl group.

6. A battery comprising:
a cetyltrimethyl ammonium bromide (CTAB) modified graphene oxide-sulfur (GO-S) nanocomposite cathode;
a separator;
an anode; and
an electrolyte, wherein the electrolyte comprises an ionic liquid-based electrolyte, and wherein the electrolyte comprises a mixture of 1,3-dioxolane (DOL) and dimethoxyethane (DME) with lithium bis(trifluoromethylsulfonyl)imide (LiTFSI).

7. The battery of claim 6, wherein the ionic liquid comprises (n-methyl-(n-propyl) pyrrolidinium bis(trifluoromethanesulfonyl)imide (PYR13TFSI).

8. The battery of claim 7, wherein the electrolyte comprises a lithium nitrate (LiNO₃) additive.

9. The battery of claim 6, wherein the electrolyte comprises PYR₁₄TFSI-LiTFSI-PEGDME.

10. The battery of claim 6, wherein the electrolyte comprises LiTFSI-PEGDME.

11. The battery of any of claims 6 to 10, wherein the graphene oxide-sulfur (GO-S) nanocomposite cathode further comprises carbon black, and polyvinylidene difluoride (PVDF).

12. The battery of claim any of claims 6 to 10, wherein the GO-S nanocomposite further comprises a plurality of functional groups and S is bonded to carbon atoms.

13. The battery of claim 12, wherein the plurality of functional groups includes at least one functional group selected from the group consisting of an epoxy bridge, a hydroxyl group, a phenol group, and a carbonyl group.

14. The battery of any of claims 6 to 13, further comprising an elastomeric binder.

15. The battery of any of claims 6 to 14, further comprising a binder comprising at least one of elastomeric styrene butadiene rubber (SBR), polyethylene oxide (PEO), and polyvinylidene fluoride (PVDF).

16. The battery of claim 15, wherein the binder further comprises carboxy methyl cellulose (CMC).

## Patentansprüche

1. Stoffzusammensetzung, umfassend:
ein Cetyltrimethylammoniumbromid (CTAB)-modifiziertes Graphenoxid (GO)-Schwefel (GO-S)-Nanokomposit, wobei GO ferner eine Vielzahl von funktionellen Gruppen umfasst und S an Kohlenstoffatome gebunden ist und die Konzentration von CTAB in einem Bereich von 2,5 mM bis 5 mM liegt.

2. Zusammensetzung nach Anspruch 1, wobei die Vielzahl der funktionellen Gruppen mindestens eine funktionelle Gruppe beinhaltet, ausgewählt aus der Gruppe bestehend aus einer Epoxidbrücke, einer Hydroxylgruppe, einer Phenolgruppe und einer Carbonylgruppe.

3. Stoffzusammensetzung nach Anspruch 1, wobei die Zusammensetzung durch Wärmebehandlung des Nanokomposits in einem Bereich von 30 Minuten bis 12 Stunden hergestellt wird.

4. Elektrode, umfassend die Zusammensetzung nach Anspruch 1.

5. Elektrode nach Anspruch 4, wobei die Vielzahl derfunktionellen Gruppen mindestens eine funktionelle Gruppe beinhaltet, ausgewählt aus der Gruppe bestehend aus einer Epoxidbrücke, einer Hydroxylgruppe, einer Phenolgruppe und einer Carbonylgruppe.

6. Batterie, umfassend:
eine Cetyltrimethylammoniumbromid (CTAB)-modifizierte Graphenoxid-Schwefel (GO-S) Nanokomposit-Kathode;
einen Separator;
eine Anode; und
einen Elektrolyten, wobei der Elektrolyt einen Elektrolyten auf Basis von ionischen Flüssigkeiten umfasst, und wobei der Elektrolyt eine Mischung aus 1,3-Dioxolan (DOL) und Dimethoxyethan (DME) mit Lithium-bis(trifluormethylsulfonyl)imid (LiTFSI) umfasst.

7. Batterie nach Anspruch 6, wobei die ionische Flüssigkeit (n-Methyl-(n-propyl)-pyrrolidin-bis(trifluormethansulfonyl)-imid (PYR13TFSI) umfasst.

8. Batterie nach Anspruch 7, wobei der Elektrolyt ein Lithiumnitrat (LiNO₃)-Additiv umfasst.

9. Batterie nach Anspruch 6, wobei der Elektrolyt PYR₁₄TFSI-LiTFSI-PEGDME umfasst.

10. Batterie nach Anspruch 6, wobei der Elektrolyt LiTFSI-PEGDME umfasst.

11. Batterie nach einem der Ansprüche 6 bis 10, wobei die Graphenoxid-Schwefel-(GO-S)-Nanokompositkathode ferner Ruß und Polyvinylidendifluorid (PVDF) umfasst.

12. Batterie nach einem der Ansprüche 6 bis 10, wobei der GO-S-Nanokompositwerkstoff ferner eine Vielzahl von funktionellen Gruppen umfasst und S an Kohlenstoffatome gebunden ist.

13. Batterie nach Anspruch 12, wobei die Vielzahl von Funktionsgruppen mindestens eine Funktionsgruppe beinhaltet, ausgewählt aus der Gruppe bestehend aus einer Epoxidbrücke, einer Hydroxylgruppe, einer Phenolgruppe und einer Carbonylgruppe.

14. Batterie nach einem der Ansprüche 6 bis 13, ferner umfassend ein elastomeres Bindemittel.

15. Batterie nach einem der Ansprüche 6 bis 14, ferner umfassend ein Bindemittel, das mindestens eines von elastomeren Styrol-Butadien-Kautschuken (SBR), Polyethylenoxid (PEO) und Polyvinylidenfluorid (PVDF) umfasst.

16. Batterie nach Anspruch 15, wobei das Bindemittel ferner Carboxymethylcellulose (CMC) umfasst.

## Revendications

1. Composition de matières comprenant :
un nanocomposite à base d'-oxyde de graphène (GO) - soufre (S-GO) modifié par un bromure de cétyltriméthylammonium (CTAB), le GO comprenant en outre une pluralité de groupes fonctionnels et S étant lié à des atomes de carbone et la concentration de CTAB étant dans la plage comprise entre 2,5 mM et 5 mM.

2. Composition de matières selon la revendication 1, dans laquelle la pluralité de groupes fonctionnels comprend au moins un groupe fonctionnel choisi dans l'ensemble constitué d'un pont époxy, d'un groupe hydroxyle, d'un groupe phénol et d'un groupe carbonyle.

3. Composition de matières selon la revendication 1, dans laquelle la composition est produite au moyen d'un traitement thermique du nanocomposite dans une plage comprise entre 30 minutes et 12 heures.

4. Electrode comprenant la composition selon la revendication 1.

5. Electrode selon la revendication 4, dans laquelle la pluralité de groupes fonctionnels inclut au moins un groupe fonctionnel choisi dans l'ensemble constitué d'un pont époxy, d'un groupe hydroxyle, d'un groupe phénol et d'un groupe carbonyle.

6. Batterie comprenant :
une cathode de nanocomposite à base de soufre-oxyde de graphène (S-GO) modifié par un bromure de cétyltriméthylammonium (CTAB) ;
un séparateur ;
une anode ; et
un électrolyte, l'électrolyte comprenant un électronique ionique à base de liquide, et l'électrolyte comprenant un mélange de 1,3-dioxolane (DOL) et de diméthoxyéthane (DME) avec du bis (trifluorométhylsulfonyl)imide de lithium (LiTFSI).

7. Batterie selon la revendication 6, dans laquelle le liquide ionique comprend du (n-méthyl-(n-propyl)pyrrolidinium bis(trifluorométhanesulfonyl)imide (PYR13TFSI).

8. Batterie selon la revendication 7, dans laquelle l'électrolyte comprend un additif à base de nitrate de lithium (LiNO₃).

9. Batterie selon la revendication 6, dans laquelle l'électrolyte comprend PYR₁₄TFSI-LiTFSI-PEGDME.

10. Batterie selon la revendication 6, dans laquelle l'électrolyte comprend LiTFSI-PEGDME.

11. Batterie selon l'une quelconque des revendications 6 à 10, dans laquelle la cathode nanocomposite à base de soufre-oxyde de graphène (S-GO) comprend en outre du charbon noir et du difluorure de polyvinylidène (PVDF).

12. Batterie selon l'une quelconque des revendications 6 à 10, dans laquelle le nanocomposite S-GO comprend en outre une pluralité de groupes fonctionnels et S est lié à des atomes de carbone.

13. Batterie selon la revendication 12, dans laquelle la pluralité de groupes fonctionnels comprend au moins un groupe fonctionnel choisi dans l'ensemble constitué d'un pont époxy, d'un groupe hydroxyle, d'un groupe phénol et d'un groupe carbonyle.

14. Batterie selon l'une quelconque des revendications 6 à 13, comprenant en outre un liant élastomère.

15. Batterie selon l'une quelconque des revendications 6 à 14, comprenant en outre un liant comprenant au moins un produit chimique parmi un caoutchouc de styrène et de butadiène (SBR) élastomère, un oxyde de polyéthylène (PEO) et du fluorure de polyvinylidène (PVDF).

16. Batterie selon la revendication 15, dans laquelle le liant comprend en outre de la carboxyméthylcellulose (CMC).
